# EUROPEAN PATENT APPLICATION

(11) **EP 4 670 853 A1**
(43) Date of publication of application: **31.12.2025**
(21) Application number: 24841886.5
(22) Date of filing: 16.01.2024
(51) Int. Cl.: B05C 1/08, H01M 4/04

(54) **COATING ROLLER ASSEMBLY, COATING METHOD, ELECTRODE SHEET AND BATTERY**

(30) Priority: 18.07.2023 CN 202310880053
(71) Applicant: Contemporary Amperex Technology Co., Limited, Ningde, Fujian 352100 (CN)
(72) Inventor: ZHANG, Nan, Ningde, Fujian 352100 (CN); YANG, Longfei, Ningde, Fujian 352100 (CN); LI, Chengfeng, Ningde, Fujian 352100 (CN); JI, Tingzhen, Ningde, Fujian 352100 (CN); XIA, Yurun, Ningde, Fujian 352100 (CN)
(74) Representative: Lorenz Seidler Gossel Part. mbB
(86) International application number: PCT/CN2024/072510
(87) International publication number: WO 2025/015879

(57) **Abstract**

The present application discloses a coating roller assembly for coating an electrode plate of a battery, where the coating roller assembly includes: coating rollers; and coating portions, disposed around the coating rollers. The coating portions include a first coating portion, a second coating portion, and a third coating portion, where the first coating portion is configured to form a first coating layer portion, the second coating portion is configured to form a second coating layer portion, and the third coating portion is configured to form a third coating layer portion between the first coating layer portion and the second coating layer portion. The present application further discloses a coating method for coating an electrode plate of a battery with the foregoing coating roller assembly, an electrode plate obtained through the coating roller assembly or the coating method, and a battery including the electrode plate.

## Description

### TECHNICAL FIELD

The present application relates to the field of batteries, and in particular, to a coating roller assembly, a coating method for coating an electrode plate of a battery with the coating roller assembly, an electrode plate obtained through the coating roller assembly or the coating method, and a battery including the electrode plate.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, a battery technology is an important factor for the development thereof.

In an actual application process of a battery, a lithium precipitation phenomenon may occur on an electrode plate of the battery due to various factors, which deteriorates performance and safety of the battery. Therefore, in the art, there is a need for a technology capable of suppressing the lithium precipitation phenomenon.

### SUMMARY

In view of the foregoing problem, the present application provides a coating roller assembly capable of alleviating or suppressing a lithium precipitation phenomenon in the middle of a battery, a coating method for coating an electrode plate of a battery with the coating roller assembly, and a battery obtained through the coating roller assembly or the coating method.

In a first aspect, the present application provides a coating roller assembly, configured to coat an electrode plate of a battery. The coating roller assembly comprises:
coating rollers; and
coating portions, disposed around the coating rollers;
where the coating portions comprise a first coating portion, a second coating portion, and a third coating portion; and
where the first coating portion is configured to form a first coating layer portion, the second coating portion is configured to form a second coating layer portion, and the third coating portion is configured to form a third coating layer portion between the first coating layer portion and the second coating layer portion.

By using at least the first coating portion, the second coating portion, and the third coating portion, when the electrode plate of the battery is coated, differentiated coating may be performed, that is, a coating layer comprising at least three coating layer portions is formed on the electrode plate. By controlling or adjusting coating parameters of the first coating portion, the second coating portion, and the third coating portion, for example, the coating depth and the slurry conductivity, characteristics of each coating layer portion may be controlled or adjusted to, for example, make each coating layer portion have a different separator resistance, which can make the separator resistance of the middle coating layer portion be greater than the separator resistance of side coating layer portions on both sides, thereby reducing the current density in the middle, alleviating lithium precipitation in the middle of a battery cell, and improving cycle performance and safety performance of the battery cell.

In some embodiments of the coating roller assembly, the coating rollers comprise at least a first coating roller and a second coating roller;
where the coating portions are correspondingly disposed around the first coating roller and the second coating roller; and
where two of the first coating portion, the second coating portion, and the third coating portion are disposed on the first coating roller, and the remaining one of the first coating portion, the second coating portion, and the third coating portion is disposed on the second coating roller.

In some embodiments of the coating roller assembly, the first coating portion and the second coating portion are disposed on the first coating roller, a spacing region is defined between the first coating portion and the second coating portion, and the third coating portion is disposed on the second coating roller and is positioned to correspond to the spacing region. Any suitable combination of the three coating portions and the two coating rollers may be used, to flexibly meet needs of actual production and design.

In some embodiments of the coating roller assembly, the first coating portion, the second coating portion, and the third coating portion define a total coating width, where the coating width of the first coating portion is one third of the total coating width, the coating width of the second coating portion is one third of the total coating width, and the coating width of the third coating portion is slightly greater than one third of the total coating width.

In some embodiments of the coating roller assembly, the coating width of the third coating portion is 0.5% to 2% greater than one third of the total coating width.

In this case, an overlapping region may be formed between the third coating layer portion and the first and second coating layer portions, to form a complete coating layer on the electrode plate of the battery.

In some embodiments of the coating roller assembly, the first coating portion, the second coating portion, and the third coating portion are disposed side by side on the coating rollers, and the third coating portion is located between the first coating portion and the second coating portion.

In some embodiments of the coating roller assembly, the first coating portion, the second coating portion, and the third coating portion define a total coating width, where the coating width of the first coating portion is slightly less than one third of the total coating width, the coating width of the second coating portion is slightly less than one third of the total coating width, and the coating width of the third coating portion is slightly less than one third of the total coating width.

In some embodiments of the coating roller assembly, the coating width of the first coating portion is 0.5% to 2% less than one third of the total coating width, the coating width of the second coating portion is 0.5% to 2% less than one third of the total coating width, and the coating width of the third coating portion is 0.5% to 2% less than one third of the total coating width.

In some embodiments of the coating roller assembly, a first gap is defined between the first coating portion and the third coating portion, and/or a second gap is defined between the second coating portion and the third coating portion.

In some embodiments of the coating roller assembly, the width of the first gap is the same as the width of the second gap.

The coating width of each of the first coating portion, the second coating portion, and the third coating portion is less than one third of the total coating width, so that the first coating portion, the second coating portion, and the third coating portion may be spaced apart from each other, which can prevent interference between the coating portions during slurry attaching, to avoid mixing between different slurries.

In some embodiments of the coating roller assembly, the conductivity of a slurry coated by the first coating portion is the same as the conductivity of a slurry coated by the second coating portion.

In some embodiments of the coating roller assembly, the conductivity of a slurry coated by the third coating portion is less than the conductivity of the slurry coated by the first coating portion and the conductivity of the slurry coated by the second coating portion.

In some embodiments of the coating roller assembly, the conductive carbon content of the slurry coated by the first coating portion is 40% to 50%, the conductive carbon content of the slurry coated by the second coating portion is 40% to 50%, and the conductive carbon content of the slurry coated by the third coating portion is 5% to 20%.

In this case, the separator resistance of the third coating layer portion formed on the electrode plate by the third coating portion is greater than the separator resistance of the first coating layer portion formed on the electrode plate by the first coating portion and the separator resistance of the second coating layer portion formed on the electrode plate by the second coating portion. In this way, the internal current density distribution of the battery can be adjusted, the current density in the middle can be reduced, a lithium precipitation phenomenon in the middle of the battery can be alleviated, and cycle performance and safety performance of the battery can be improved.

In some embodiments of the coating roller assembly, the coating depth of the first coating portion is the same as the coating depth of the second coating portion.

In some embodiments of the coating roller assembly, the coating depth of the third coating portion is greater than the coating depth of the first coating portion and the coating depth of the second coating portion.

In some embodiments of the coating roller assembly, the coating depth of the third coating portion is 1.1 times to 6.2 times the coating depth of the first coating portion and/or the coating depth of the second coating portion.

Likewise, in this case, the separator resistance of the third coating layer portion formed on the electrode plate by the third coating portion is greater than the separator resistance of the first coating layer portion formed on the electrode plate by the first coating portion and the separator resistance of the second coating layer portion formed on the electrode plate by the second coating portion. In this way, the internal current density distribution of the battery can be adjusted, the current density in the middle can be reduced, a lithium precipitation phenomenon in the middle of the battery can be alleviated, and cycle performance and safety performance of the battery can be improved.

In some embodiments of the coating roller assembly, the coating rollers are gravure rollers.

In a second aspect, the present application provides a method for coating an electrode plate of a battery with the coating roller assembly as described above. The method comprises the following steps:
immersing the coating roller assembly into troughs, so that the first coating portion, the second coating portion, and the third coating portion each are attached with a slurry from a respective trough; and
coating an electrode plate with the coating roller assembly, to form a first coating layer portion on the electrode plate by the first coating portion, form a second coating layer portion on the electrode plate by the second coating portion, and form a third coating layer portion on the electrode plate by the third coating portion, where the third coating layer portion is located between the first coating layer portion and the second coating layer portion. The separator resistance of the middle coating layer portion formed in this way may be greater than the separator resistances of the side coating layer portions. Therefore, the internal current density distribution of the battery can be adjusted, the current density in the middle can be reduced, a lithium precipitation phenomenon in the middle of the battery can be alleviated, and cycle performance and safety performance of the battery can be improved.

In some embodiments of the method, the method comprises the following steps: coating one side of the electrode plate with the coating roller assembly, and coating the other side of the electrode plate with the coating roller assembly.

In some embodiments of the method, the method comprises the following step: pressing a coating layer after the coating layer is formed by coating the electrode plate with the coating roller assembly. By pressing the coating layer, the middle coating layer portion and the side coating layer portions may be expanded to both sides thereof to contact each other, to finally form a complete coating layer.

In a third aspect, the present application provides an electrode plate, comprising the coating layer formed with the coating roller assembly as described above or the method as described above. Specifically, the electrode plate comprises a coating layer, the coating layer comprising a first coating layer portion, a second coating layer portion, and a third coating layer portion, where the third coating layer portion is located between the first coating layer portion and the second coating layer portion.

In some embodiments of the electrode plate, the first coating layer portion is formed by a first coating portion of a coating roller assembly, the second coating layer portion is formed by a second coating portion of the coating roller assembly, and the third coating layer portion is formed by a third coating portion of the coating roller assembly.

In some embodiments of the electrode plate, the separator resistance of the third coating layer portion formed on the electrode plate by the third coating portion is greater than the separator resistance of the first coating layer portion formed on the electrode plate by the first coating portion and the separator resistance of the second coating layer portion formed on the electrode plate by the second coating portion.

In some embodiments of the electrode plate, the separator resistance of the third coating layer portion formed on the electrode plate by the third coating portion is 1.1 times to 6.2 times the separator resistance of the first coating layer portion formed on the electrode plate by the first coating portion and the separator resistance of the second coating layer portion formed on the electrode plate by the second coating portion.

In some embodiments of the electrode plate, the conductivity of the first coating layer portion formed on the electrode plate by the first coating portion is the same as the conductivity of the second coating layer portion formed on the electrode plate by the second coating portion.

In some embodiments of the electrode plate, the conductivity of the third coating layer portion formed on the electrode plate by the third coating portion is less than the conductivity of the first coating layer portion formed on the electrode plate by the first coating portion and the conductivity of the second coating layer portion formed on the electrode plate by the second coating portion.

In some embodiments of the electrode plate, the conductive carbon content of the first coating layer portion formed on the electrode plate by the first coating portion is 40% to 50%, the conductive carbon content of the second coating layer portion formed on the electrode plate by the second coating portion is 40% to 50%, and the conductive carbon content of the third coating layer portion formed on the electrode plate by the third coating portion is 5% to 20%.

In some embodiments of the electrode plate, the thickness of the first coating layer portion formed on the electrode plate by the first coating portion is the same as the thickness of the second coating layer portion formed on the electrode plate by the second coating portion.

In some embodiments of the electrode plate, the thickness of the third coating layer portion formed on the electrode plate by the third coating portion is greater than the thickness of the first coating layer portion formed on the electrode plate by the first coating portion and the thickness of the second coating layer portion formed on the electrode plate by the second coating portion.

In some embodiments of the electrode plate, the thickness of the third coating layer portion formed on the electrode plate by the third coating portion is 1.1 times to 6.2 times the thickness of the first coating layer portion formed on the electrode plate by the first coating portion and/or the thickness of the second coating layer portion formed on the electrode plate by the second coating portion.

According to a fourth aspect, the present application provides a battery, comprising the electrode plate as described above.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a perspective view of a coating roller assembly according to some embodiments of the present application;
FIG. 2 is a perspective view of a first coating roller and corresponding coating portions of the coating roller assembly shown in FIG. 1;
FIG. 3 is a cross-sectional view of a first coating roller and corresponding coating portions of the coating roller assembly shown in FIG. 1;
FIG. 4 is a perspective view of a second coating roller and corresponding coating portions of the coating roller assembly shown in FIG. 1;
FIG. 5 is a cross-sectional view of a second coating roller and corresponding coating portions of the coating roller assembly shown in FIG. 1;
FIG. 6 is a perspective view of a coating roller assembly according to some other embodiments of the present application;
FIG. 7 is a cross-sectional view of the coating roller assembly shown in FIG. 6; and
FIG. 8 is a perspective view of the coating roller assembly shown in FIG. 6, and further shows troughs corresponding to coating portions.

Reference numerals in specific implementations are as follows:
coating roller assembly 3;
coating roller 30; longitudinal axis 300; outer circumference 330; first gap 332; second gap 334;
first coating roller 32; first longitudinal axis 320; first outer circumference 322; spacing region 324;
second coating roller 34; second longitudinal axis 340; second outer circumference 342;
coating portions 36; first coating portion 362; second coating portion 364; third coating portion 366;
trough 40; first trough 402; second trough 404; third trough 406.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand the specific meanings of the above terms in the embodiments of the present application according to specific situations.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

However, batteries have many problems in these applications, for example, a lithium precipitation phenomenon. The lithium precipitation phenomenon is a problem that is quite likely to occur in a battery, and has a great influence on performance, safety, and service life of the battery. Therefore, it is necessary to suppress the occurrence of the lithium precipitation phenomenon in the battery.

There are many factors that cause the lithium precipitation phenomenon in the battery. After in-depth mechanism research and multiple test analyses, the inventors of the present application have found that in an actual application process of a battery, expansion forces and temperatures at different positions may be different, and such a difference may cause the current density in the middle of a large surface of an electrode plate to be large to the extent that a lithium precipitation limit is exceeded, which may cause a lithium precipitation phenomenon in a middle region of the electrode plate, thereby deteriorating performance and safety of the battery.

Therefore, in the present application, it is considered to resolve the problem of lithium precipitation in the middle of an electrode plate of a battery from the perspective of reducing the current density in the middle of the electrode plate. Specifically, when a slurry is coated on the electrode plate of the battery through a coating roller, differential coating is used, that is, different coating is performed on different positions on the electrode plate, to increase the separator resistance at the middle position of the electrode plate, thereby reducing the current density in the middle, alleviating lithium precipitation in the middle of a battery cell, and improving cycle performance and safety performance of the battery cell.

Specifically, a plurality of coating portions may be formed on the coating roller, and a relative separator resistance difference between different positions of the electrode plate is generated or changed by changing coating parameters of each coating portion, to increase the separator resistance at the middle position of the electrode plate and reduce the current density in the middle. For example, different coating portions are attached with slurries with different conductivities, so that a coating layer coated on the electrode plate has different separator resistances at different positions. Alternatively, different coating portions have different coating depths, so that the coating layer coated on the electrode plate has different separator resistances at different positions.

The coating roller assembly and the method for using the same disclosed in the embodiments of the present application are used to coat an electrode plate of a battery, to form a coating layer on one side or both sides of the electrode plate. By using the coating roller assembly and the method for using the same disclosed in the embodiments of the present application, the current density in the middle of a battery can be reduced, lithium precipitation in the middle of the battery can be alleviated, and cycle performance and safety performance of the battery can be improved.

A battery formed by the coating roller assembly and the method for using the same disclosed in the embodiments of the present application may be used as a power supply for an electric apparatus, and the electric apparatus may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

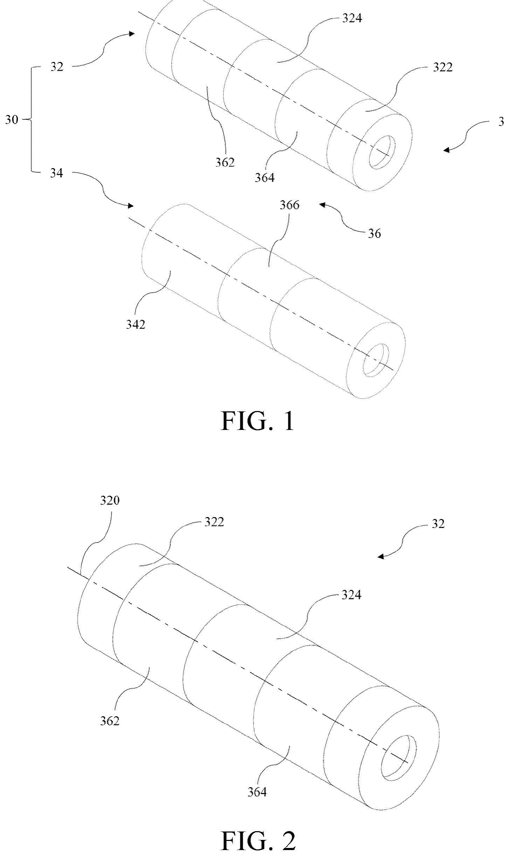

According to some embodiments of the present application, FIG. 1 to FIG. 8 respectively show a perspective view and a cross-sectional view of a coating roller assembly 3 according to the present application. The coating roller assembly 3 is configured to coat an electrode plate of a battery, to form a coating layer on one side or both sides of the electrode plate.

According to the present application, a coating roller assembly 3 is provided, configured to coat an electrode plate of a battery. The coating roller assembly 3 includes: a coating roller 30; and coating portions 36, disposed around the coating roller 30. The coating portions 36 include a first coating portion 362, a second coating portion 364, and a third coating portion 366. The first coating portion 362 is configured to form a first coating layer portion, the second coating portion 364 is configured to form a second coating layer portion, and the third coating portion 366 is configured to form a third coating layer portion between the first coating layer portion and the second coating layer portion.

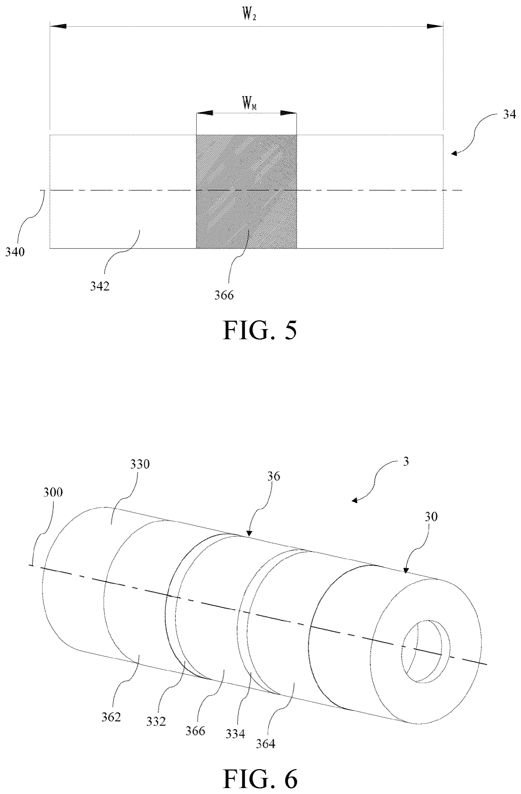

Specifically, the coating roller assembly 3 according to the present application may include the coating roller 30, and the coating roller 30 may have, for example, a substantially cylindrical shape, to facilitate roll coating of the electrode plate. Correspondingly, the coating roller 30 defines an outer circumference 320. A quantity of coating rollers 30 may be selected according to a need of an actual application, for example, two coating rollers (as shown in embodiments of FIG. 1 to FIG. 5), one coating roller (as shown in embodiments of FIG. 6 to FIG. 8), or any other suitable quantity of coating rollers may be included. Each coating roller may have a respective longitudinal axis, and the longitudinal axis is an axis passing through the center of a cylinder and extending in an axial direction of the cylinder.

The coating roller assembly 3 according to the present application may further include the coating portions 36, and the coating portions 36 may be disposed around the outer circumference 320 of the coating roller 30, so that the coating portions 36 can coat the electrode plate with a slurry as the coating roller 30 rolls on the electrode plate.

The "coating portion" described herein is a component disposed on the coating roller and used to coat the electrode plate of the battery with a slurry, and is also generally referred to as a coating region. The coating portion may be coupled with the coating roller in various ways. For example, the coating portion may be formed integrally with the coating roller, for example, the coating portion may be formed by machining on the coating roller. Alternatively, the coating portion may be fixedly attached to the coating roller. When the electrode plate is coated by using the coating roller, the coating roller and the coating portion may be immersed into a trough, so that a slurry in the trough adheres to the coating portion, and when the coating roller rolls on the electrode plate of the battery, the coating portion coats the electrode plate with the slurry adhered thereto to form a coating layer on the electrode plate.

According to some embodiments of the present application, the coating roller assembly 3 may include a plurality of coating portions, for example, at least the first coating portion 362, the second coating portion 364, and the third coating portion 366, which cooperate with each other to coat the electrode plate of the battery. A quantity of coating portions may be determined according to a need of an actual application, for example, the coating roller assembly 3 may include more than three coating portions.

The first coating portion 362 may be configured to form a first coating layer portion, the second coating portion 364 may be configured to form a second coating layer portion, and the third coating portion 366 may be configured to form a third coating layer portion between the first coating layer portion and the second coating layer portion. For example, the first coating portion 362 and the second coating portion 364 may be configured to form side coating layer portions on both sides of the electrode plate of the battery, and the third coating portion 366 may be configured to form a middle coating layer portion in the middle of the electrode plate of the battery, where the middle coating layer portion is located between the side coating layer portions. The electrode plate of the battery is usually a strip-shaped sheet extending in its length direction or longitudinal direction, and the "both sides of the electrode plate of the battery" and "the middle of the electrode plate of the battery" are relative to a width direction or transverse direction that is of the electrode plate and that is perpendicular to the length direction or longitudinal direction, that is, the two sides and the middle of the electrode plate in the width direction. The formed side coating layer portions extend in the length direction of the electrode plate on both sides of the electrode plate of the battery, and the formed middle coating layer portion extends in the length direction of the electrode plate in the middle of the electrode plate of the battery, so that the coating layer formed on the electrode plate of the battery through the coating roller assembly 3 includes three coating layer portions that extend in the length direction of the electrode plate and that are disposed side by side. The side coating layer portions on both sides may extend to an edge of the electrode plate in the width direction, or may be spaced apart from the edge of the electrode plate.

In the illustrated embodiments, three coating portions 362, 364, and 364 are shown. However, those skilled in the art can understand that more than three coating portions may be used without departing from the spirit and scope of the present application, so that the coating layer formed on the electrode plate of the battery can include more than three coating layer portions that extend in the length direction of the electrode plate and that are disposed side by side.

By using at least the first coating portion 362, the second coating portion 364, and the third coating portion 366, when the electrode plate of the battery is coated, differentiated coating may be performed, that is, a coating layer including at least three coating layer portions is formed on the electrode plate. By controlling or adjusting coating parameters of the first coating portion 362, the second coating portion 364, and the third coating portion 366, for example, the coating depth and the slurry conductivity, characteristics of each coating layer portion may be controlled or adjusted to, for example, make each coating layer portion have a different separator resistance. In some embodiments, the separator resistance of the middle coating layer portion may be greater than the separator resistance of the side coating layer portions on both sides, thereby reducing the current density in the middle, alleviating lithium precipitation in the middle of a battery cell, and improving cycle performance and safety performance of the battery cell.

According to some embodiments of the present application, as shown in FIG. 1 to FIG. 5, the coating rollers 30 include at least a first coating roller 32 and a second coating roller 34. The coating portions 36 are correspondingly disposed around the first coating roller 32 and the second coating roller 34. Two of the first coating portion 362, the second coating portion 364, and the third coating portion 366 are disposed on the first coating roller 32, and the remaining one of the first coating portion 362, the second coating portion 364, and the third coating portion 366 is disposed on the second coating roller 34.

Specifically, the coating roller assembly 3 may include at least two coating rollers, for example, the first coating roller 32 and the second coating roller 34. The first coating roller 32 and the second coating roller 34 may be separated from each other, and may coat the electrode plate of the battery separately or sequentially. The coating rollers may have substantially the same shape, for example, both the first coating roller 32 and the second coating roller 34 may have a substantially cylindrical shape, to facilitate roll coating of the electrode plate. Accordingly, the first coating roller 32 may define a first outer circumference 322 and the second coating roller 34 may define a second outer circumference 342. In addition, each coating roller may have a respective longitudinal axis, that is, the first coating roller 32 has a first longitudinal axis 320, the second coating roller 34 has a second longitudinal axis 340, and the first longitudinal axis 320 and the second longitudinal axis 340 are axes passing through the centers of cylinders and extending in the axial directions of the cylinders, as shown in FIG. 1 to FIG. 5.

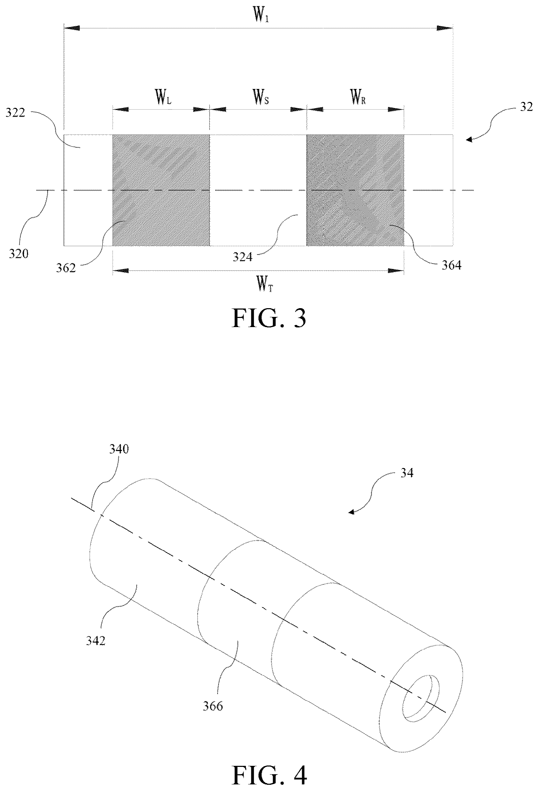

As shown in FIG. 3 and FIG. 5, the first coating roller 32 may have a width W₁ (defined herein as a width since this dimension actually corresponds to the width direction of a coating layer to be formed on the electrode plate) measured along the first longitudinal axis 320. Likewise, the second coating roller 34 may have a width W₂ measured along the second longitudinal axis 340. The width W₁ of the first coating roller 32 and the width W₂ of the second coating roller 34 may be the same, for example, both 800 mm, but may alternatively be different.

The first coating portion 362, the second coating portion 364, and the third coating portion 366 are correspondingly disposed around the first outer circumference 322 of the first coating roller 32 and the second outer circumference 342 of the second coating roller 34. Specifically, two of the first coating portion 362, the second coating portion 364, and the third coating portion 366 may be disposed on the first outer circumference 322 of the first coating roller 32, and the remaining one of the first coating portion 362, the second coating portion 364, and the third coating portion 366 may be disposed on the second outer circumference 342 of the second coating roller 34. For example, the first coating portion 362 and the second coating portion 364 are disposed on the first coating roller 32, and the third coating portion 366 is disposed on the second coating roller 34. Alternatively, the first coating portion 362 and the third coating portion 366 are disposed on the first coating roller 32, and the second coating portion 364 is disposed on the second coating roller 34. Alternatively, the second coating portion 364 and the third coating portion 366 are disposed on the first coating roller 32, and the first coating portion 362 is disposed on the second coating roller 34.

Any suitable combination of the three coating portions and the two coating rollers may be used, to flexibly meet needs of actual production and design. In some other embodiments, the coating roller assembly 3 may include more than two coating rollers, for example, may include three coating rollers, and each coating portion may be correspondingly disposed on one coating roller. The quantity of coating portions may be equal to or greater than the quantity of coating rollers, so that at least one coating portion is disposed on each coating roller.

According to some embodiments of the present application, the first coating portion 362 and the second coating portion 364 are disposed on the first coating roller 32, a spacing region 324 is defined between the first coating portion 362 and the second coating portion 364, and the third coating portion 366 is disposed on the second coating roller 34 and is positioned to correspond to the spacing region 324.

Specifically, as shown in FIG. 2 and FIG. 3, the first coating portion 362 and the second coating portion 364 may be disposed on the first outer circumference 322 of the first coating roller 32 and may be spaced apart from each other, to define the spacing region 324 between the first coating portion 362 and the second coating portion 364. When both the first coating portion 362 and the second coating portion 364 are disposed on the first coating roller 32, when the electrode plate of the battery is coated, the first and second coating layer portions are formed on the electrode plate of the battery through the first coating portion 362 and the second coating portion 364 as the first coating roller 32 rolls on the electrode plate.

As shown in FIG. 4 and FIG. 5, the third coating portion 366 may be disposed on the second outer circumference 342 of the second coating roller 34. When the electrode plate of the battery is coated, the third coating layer portion is formed on the electrode plate of the battery through the third coating portion 366 as the second coating roller 34 rolls on the electrode plate. According to the embodiments shown in FIG. 4 and FIG. 5, the third coating portion 366 may be positioned to correspond to the spacing region 324. That the third coating portion 366 corresponds to the spacing region 324 means that a position of the third coating portion 366 on the second coating roller 34 is substantially equivalent to a position of the spacing region 324 on the first coating roller 32, for example, when the first coating roller 32 and the second coating roller 34 are aligned with each other, the third coating portion 366 and the spacing region 324 are also aligned with each other.

Generally, it is expected that the side coating layer portions on both sides of the electrode plate of the battery have the same characteristics. Therefore, the first coating portion 362 and the second coating portion 364 that form the side coating layer portions are disposed on the first coating roller 32, which can reduce complexity of operation. For example, the first coating portion 362 and the second coating portion 364 can attach the same slurry from the same trough, and it is not necessary to obtain slurries from different troughs for the first coating portion 362 and the second coating portion 364, respectively. The third coating portion 366 is disposed to correspond to the spacing region 324, which also facilitates alignment during coating, so that the middle coating layer portion may be desirably located between the side coating layer portions.

According to some embodiments of the present application, the first coating portion 362, the second coating portion 364, and the third coating portion 366 define a total coating width, where the coating width of the first coating portion 362 is one third of the total coating width, the coating width of the second coating portion 364 is one third of the total coating width, and the coating width of the third coating portion 366 is greater than one third of the total coating width.

According to some embodiments of the present application, the coating width of the third coating portion 366 is 0.5% to 2% greater than one third of the total coating width.

Specifically, the first coating portion 362, the second coating portion 364, and the third coating portion 366 define a total coating width W_{T}. The total coating width W_{T} is a dimension along the longitudinal axis of the coating roller, and corresponds to the width of the coating layer finally formed on the electrode plate of the battery by the coating roller assembly 3.

As shown in FIG. 3, the first coating portion 362 defines the coating width W_{L} along the first longitudinal axis 320 of the first coating roller 32, and the coating width W_{L} is substantially equivalent to the dimension of the first coating portion 362 (i.e., the width dimension of the first coating portion 362) measured along the first longitudinal axis 320 of the first coating roller 32, and corresponds to the width of the first coating layer portion formed on the electrode plate by the first coating portion 362. The coating width W_{L} may be one third of the total coating width W_{T}.

Likewise, the second coating portion 364 defines the coating width W_{R} along the first longitudinal axis 320 of the first coating roller 32, and the coating width W_{R} is substantially equivalent to the dimension of the second coating portion 364 (i.e., the width dimension of the second coating portion 364) measured along the first longitudinal axis 320 of the first coating roller 32, and corresponds to the width of the second coating layer portion formed on the electrode plate by the second coating portion 364. The coating width W_{R} may be one third of the total coating width W_{T}.

The spacing region 324 between the first coating portion 362 and the second coating portion 364 defines the width W_{S} measured along the first longitudinal axis 320 of the first coating roller 32, and this width W_{S} may likewise be one third of the total coating width W_{T}. In this way, the sum of the coating width W_{L} of the first coating portion 362, the coating width W_{R} of the second coating portion 364, and the width W_{S} of the spacing region 324 is equal to the total coating width W_{T}, as shown in FIG. 3.

As shown in FIG. 5, the third coating portion 366 defines the coating width W_{M} along the second longitudinal axis 340 of the second coating roller 34, and the coating width W_{M} is substantially equivalent to the dimension of the third coating portion 366 (i.e., the width dimension of the third coating portion 366) measured along the second longitudinal axis 340 of the second coating roller 34, and corresponds to the width of the third coating layer portion formed on the electrode plate by the third coating portion 366. The coating width W_{M} may be slightly greater than one third of the total coating width W_{T}. Here, "slightly greater than" may mean that the coating width W_{M} of the third coating portion 366 is 0.5% to 2% greater than one third of the total coating width W_{T}. For example, the coating width W_{M} of the third coating portion 366 may be one third of the total coating width W_{T} plus 2 millimeters.

In an embodiment, the total coating width W_{T} may be, for example, 600 millimeters, and correspondingly, the coating width W_{L} of the first coating portion 362 is 200 millimeters, the coating width W_{R} of the second coating portion 364 is 200 millimeters, and the width W_{S} of the spacing region 324 is 200 millimeters, as shown in FIG. 3. The coating width W_{M} of the third coating portion 366 is slightly greater than 200 millimeters, and may be, for example, 202 millimeters, as shown in FIG. 5.

The coating width W_{L} of the first coating portion 362 is the same as the coating width W_{R} of the second coating portion 364, so that the width of the first coating layer portion formed on the electrode plate by the first coating portion 362 is the same as the width of the second coating layer portion formed on the electrode plate by the second coating portion 364. The coating width W_{M} of the third coating portion 366 is slightly greater than the coating width W_{L} of the first coating portion 362 and the coating width W_{R} of the second coating portion 364, so that the width of the third coating layer portion formed on the electrode plate by the third coating portion 366 may be slightly greater than the width of the first coating layer portion formed on the electrode plate by the first coating portion 362 and the width of the second coating layer portion formed on the electrode plate by the second coating portion 364. Therefore, an overlapping region may be formed between the middle coating layer portion and the side coating layer portions, to form a complete coating layer on the electrode plate of the battery.

According to some other embodiments of the present application, the first coating portion 362, the second coating portion 364, and the third coating portion 366 are disposed side by side on the coating roller 30, and the third coating portion 366 is located between the first coating portion 362 and the second coating portion 364.

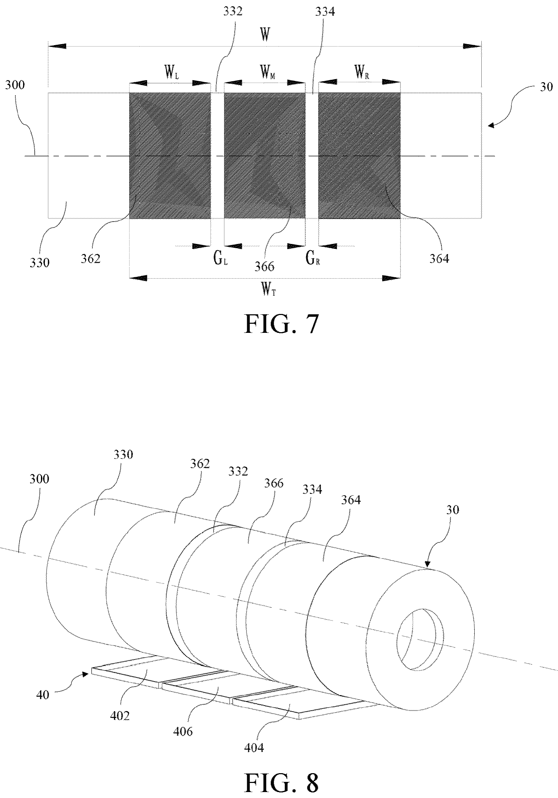

Specifically, as shown in FIG. 6 and FIG. 7, the coating roller assembly 3 may include a single coating roller 30. In this case, the first coating portion 362, the second coating portion 364, and the third coating portion 366 may be disposed side by side on the outer circumference 320 of the coating roller 30, and the third coating portion 366 is located between the first coating portion 362 and the second coating portion 364. The single coating roller 30 may have a substantially cylindrical shape, to facilitate roll coating of the electrode plate. The coating roller 30 may have a longitudinal axis 300, which is an axis passing through the center of a cylinder and extending in an axial direction of the cylinder, as shown in FIG. 6 and FIG. 7. In addition, the coating roller 30 may have the width W measured along the longitudinal axis 300, and in an embodiment, the width W may be, for example, 800 millimeters.

The coating roller assembly 3 uses a single coating roller 30, which can simplify a structure and reduce costs. Meanwhile, since the single coating roller 30 still has the first coating portion 362, the second coating portion 364, and the third coating portion 366, the objective of the present application can also be achieved. The electrode plate of the battery is coated differentially through a plurality of coating portions, and the separator resistance of the middle coating layer portion is controlled or adjusted, to reduce the current density in the middle, improve lithium precipitation in the middle of a battery cell, and improve cycle performance and safety performance of the battery cell.

According to some other embodiments of the present application, the first coating portion 362, the second coating portion 364, and the third coating portion 366 define a total coating width, where the coating width of the first coating portion 362 is less than one third of the total coating width, the coating width of the second coating portion 364 is less than one third of the total coating width, and the coating width of the third coating portion 366 is less than one third of the total coating width.

According to some other embodiments of the present application, the coating width of the first coating portion 362 is 0.5% to 2% less than one third of the total coating width, the coating width of the second coating portion 364 is 0.5% to 2% less than one third of the total coating width, and the coating width of the third coating portion 366 is 0.5% to 2% less than one third of the total coating width.

Specifically, as shown in FIG. 7, the first coating portion 362, the second coating portion 364, and the third coating portion 366 define a total coating width W_{T}. The total coating width W_{T} is a dimension along the longitudinal axis 300 of the coating roller 30, and corresponds to the width of the coating layer finally formed on the electrode plate of the battery by the coating roller assembly 3.

As shown in FIG. 7, the first coating portion 362 defines the coating width W_{L} along the longitudinal axis 300 of the coating roller 30, the coating width W_{L} is substantially equivalent to the dimension of the first coating portion 362 (i.e., the width dimension of the first coating portion 362) measured along the longitudinal axis 300 of the coating roller 30, and corresponds to the width of the first coating layer portion formed on the electrode plate by the first coating portion 362. The coating width W_{L} may be slightly less than one third of the total coating width W_{T}. Here, "slightly less than" may mean that the coating width W_{L} of the first coating portion 362 is 0.5% to 2% less than one third of the total coating width W_{T}. For example, the coating width W_{L} of the first coating portion 362 may be one third of the total coating width W_{T} minus 2 millimeters.

The second coating portion 364 defines the coating width W_{R} along the longitudinal axis 300 of the coating roller 30, and the coating width W_{R} is substantially equivalent to the dimension of the second coating portion 364 (i.e., the width dimension of the second coating portion 364) measured along the longitudinal axis 300 of the coating roller 30, and corresponds to the width of the second coating layer portion formed on the electrode plate by the second coating portion 364. The coating width W_{R} may be slightly less than one third of the total coating width W_{T}. Here, "slightly less than" may mean that the coating width W_{R} of the second coating portion 364 is 0.5% to 2% less than one third of the total coating width W_{T}. For example, the coating width W_{R} of the second coating portion 364 may be one third of the total coating width W_{T} minus 2 millimeters.

Likewise, the third coating portion 366 defines the coating width W_{M} along the longitudinal axis 300 of the coating roller 30, the coating width W_{M} is substantially equivalent to the dimension of the third coating portion 366 (i.e., the width dimension of the third coating portion 366) measured along the longitudinal axis 300 of the coating roller 30, and corresponds to the width of the third coating layer portion formed on the electrode plate by the third coating portion 366. The coating width W_{M} may be slightly less than one third of the total coating width W_{T}. Here, "slightly less than" may mean that the coating width W_{M} of the third coating portion 366 is 0.5% to 2% less than one third of the total coating width W_{T}. For example, the coating width W_{M} of the third coating portion 366 may be one third of the total coating width W_{T} minus 2 millimeters.

The coating width of each of the first coating portion 362, the second coating portion 364, and the third coating portion 366 is less than one third of the total coating width W_{T}, so that the first coating portion 362, the second coating portion 364, and the third coating portion 366 may be spaced apart from each other, which can prevent interference between the coating portions during slurry attaching, to avoid mixing between different slurries.

In an embodiment, the coating width W_{L} of the first coating portion 362, the coating width W_{R} of the second coating portion 364, and the coating width W_{M} of the third coating portion 366 may be the same, so that the width of the first coating layer portion formed on the electrode plate by the first coating portion 362, the width of the second coating layer portion formed on the electrode plate by the second coating portion 364, and the width of the third coating layer portion formed on the electrode plate by the third coating portion 366 are the same.

In an embodiment, the total coating width W_{T} may be, for example, 600 millimeters, and correspondingly, the coating width W_{L} of the first coating portion 362 is less than 200 millimeters, for example, may be 198 millimeters, the coating width W_{R} of the second coating portion 364 is less than 200 millimeters, for example, may be 198 millimeters, and the coating width W_{M} of the third coating portion 366 is less than 200 millimeters, for example, may be 198 millimeters, as shown in FIG. 7.

According to some other embodiments of the present application, a first gap 332 is included between the first coating portion 362 and the third coating portion 366, and/or a second gap 334 is included between the second coating portion 364 and the third coating portion 366.

According to some other embodiments of the present application, the width of the first gap 332 is the same as the width of the second gap 334.

Specifically, the coating width of each of the first coating portion 362, the second coating portion 364, and the third coating portion 366 is less than one third of the total coating width W_{T}. Therefore, when the first coating portion 362, the second coating portion 364, and the third coating portion 366 are disposed side by side on the outer circumference 320 of the coating roller 30, the first gap 332 may be defined between the first coating portion 362 and the third coating portion 366, and/or the second gap 334 may be defined between the second coating portion 364 and the third coating portion 366, as shown in FIG. 7.

The first gap 332 may have the width G_{L} along the longitudinal axis 300 of the coating roller 30, and the second gap 334 may have the width G_{R} along the longitudinal axis 300 of the coating roller 30. In an embodiment, the width G_{L} and the width G_{R} may be the same. Certainly, those skilled in the art may understand that the width G_{L} and the width G_{R} may alternatively be different.

When the coating width W_{L} of the first coating portion 362, the coating width W_{R} of the second coating portion 364, and the coating width W_{M} of the third coating portion 366 each are 198 millimeters, the width G_{L} may be, for example, 3 millimeters, and the width G_{R} may also be, for example, 3 millimeters, as shown in FIG. 7.

The first coating portion 362, the second coating portion 364, and the third coating portion 366 are evenly spaced apart from each other, which may be conducive to avoiding mixing between different slurries and can also facilitate formation of each coating portion.

According to some embodiments of the present application, the conductivity of a slurry coated by the first coating portion 362 is the same as the conductivity of a slurry coated by the second coating portion 364.

Specifically, the conductivity of the slurry coated by the first coating portion 362 and the conductivity of the slurry coated by the second coating portion 364 may be the same, so that the first coating layer portion formed on the electrode plate by the first coating portion 362 and the second coating layer portion formed on the electrode plate by the second coating portion 364 may have the same separator resistance. In an embodiment, the first coating portion 362 and the second coating portion 364 may coat a same slurry. When the first coating portion 362 and the second coating portion 364 are disposed on the outer circumference 322 of the first coating roller 32, the first coating portion 362 and the second coating portion 364 may share one trough, which reduces operation steps and costs.

According to some embodiments of the present application, the conductivity of a slurry coated by the third coating portion 366 is less than the conductivity of the slurry coated by the first coating portion 362 and the conductivity of the slurry coated by the second coating portion 364.

Specifically, the conductivity of the slurry coated by the third coating portion 366 may be less than the conductivity of the slurry coated by the first coating portion 362 and the conductivity of the slurry coated by the second coating portion 364, so that the separator resistance of the third coating layer portion formed on the electrode plate by the third coating portion 366 may be greater than the separator resistance of the first coating layer portion formed on the electrode plate by the first coating portion 362 and the separator resistance of the second coating layer portion formed on the electrode plate by the second coating portion 364. In this way, the internal current density distribution of the battery can be adjusted, the current density in the middle can be reduced, a lithium precipitation phenomenon in the middle of the battery can be alleviated, and cycle performance and safety performance of the battery can be improved.

According to some embodiments of the present application, the conductive carbon content of the slurry coated by the first coating portion 362 is 40% to 50%, the conductive carbon content of the slurry coated by the second coating portion 364 is 40% to 50%, and the conductive carbon content of the slurry coated by the third coating portion 366 is 5% to 20%.

Specifically, the conductive carbon content of the slurry coated by the first coating portion 362 may be 40% to 50%, and correspondingly, the conductive carbon content of the slurry coated by the second coating portion 364 may be 40% to 50%. In this case, the conductive carbon content of the slurry coated by the third coating portion 366 may be 5% to 20%. In this case, the first coating layer portion formed on the electrode plate by the first coating portion 362 and the second coating layer portion formed on the electrode plate by the second coating portion 364 may have the same separator resistance, and the separator resistance of the third coating layer portion formed on the electrode plate by the third coating portion 366 may be greater than the separator resistance of the first coating layer portion formed on the electrode plate by the first coating portion 362 and the separator resistance of the second coating layer portion formed on the electrode plate by the second coating portion 364. In addition, through the design of the foregoing conductive carbon contents, the ratio of the separator resistance of the third coating layer portion formed on the electrode plate by the third coating portion 366 to the separator resistance of the first coating layer portion formed on the electrode plate by the first coating portion 362 may be in a range of 1.1 to 6.2, and/or the ratio of the separator resistance of the third coating layer portion formed on the electrode plate by the third coating portion 366 to the separator resistance of the second coating layer portion formed on the electrode plate by the second coating portion 364 may be in a range of 1.1 to 6.2.

According to some embodiments of the present application, the coating depth of the first coating portion 362 and the coating depth of the second coating portion 364 may be the same. The coating depth may correspond to the dimension of the coating portion in the radial direction perpendicular to the longitudinal axis of the coating roller, and correspond to the thickness of a coating layer portion formed on the electrode plate of the battery by each coating portion. The coating depth of the first coating portion 362 is the same as the coating depth of the second coating portion 364, so that the first coating layer portion formed on the electrode plate by the first coating portion 362 and the second coating layer portion formed on the electrode plate by the second coating portion 364 may have the same separator resistance. In an embodiment, the coating depth of the first coating portion 362 may be, for example, 28 micrometers, and the coating depth of the second coating portion 364 may also be, for example, 28 micrometers.

According to some embodiments of the present application, the coating depth of the third coating portion 366 may be greater than the coating depth of the first coating portion 362 and the coating depth of the second coating portion 364, so that the separator resistance of the third coating layer portion formed on the electrode plate by the third coating portion 366 may be greater than the separator resistance of the first coating layer portion formed on the electrode plate by the first coating portion 362 and the separator resistance of the second coating layer portion formed on the electrode plate by the second coating portion 364. In this way, the internal current density distribution of the battery can be adjusted, the current density in the middle can be reduced, a lithium precipitation phenomenon in the middle of the battery can be alleviated, and cycle performance and safety performance of the battery can be improved. In an embodiment, the coating depth of the third coating portion 366 may be, for example, 56 micrometers.

Specifically, the coating depth of the third coating portion 366 may be 1.1 times to 6.2 times the coating depth of the first coating portion 362 and/or the coating depth of the second coating portion 364. In this case, the ratio of the separator resistance of the third coating layer portion formed on the electrode plate by the third coating portion 366 to the separator resistance of the first coating layer portion formed on the electrode plate by the first coating portion 362 may be in a range of 1.1 to 6.2, and/or the ratio of the separator resistance of the third coating layer portion formed on the electrode plate by the third coating portion 366 to the separator resistance of the second coating layer portion formed on the electrode plate by the second coating portion 364 may be in a range of 1.1 to 6.2. For example, as described above, the coating depth of the first coating portion 362 and the coating depth of the second coating portion 364 each may be, for example, 28 micrometers, and the coating depth of the third coating portion 366 may be, for example, 56 micrometers.

By controlling, adjusting, and designing coating parameters of the first coating portion 362, the second coating portion 364, and the third coating portion 366, for example, the conductivity and coating depth of a coated slurry, a relationship between the separator resistance of the third coating layer portion formed on the electrode plate by the third coating portion 366 and both the separator resistance of the first coating layer portion formed on the electrode plate by the first coating portion 362 and the separator resistance of the second coating layer portion formed on the electrode plate by the second coating portion 364 can be controlled and adjusted, thereby adjusting the internal current density distribution of the battery, reducing the current density in the middle, alleviating the lithium precipitation phenomenon in the middle of the battery, and improving cycle performance and safety performance of the battery. The foregoing definitions of the coating parameters of the first coating portion 362, the second coating portion 364, and the third coating portion 366 may be applicable to all embodiments of the present application, that is, whether a single coating roller or a plurality of coating rollers are included, and whether the quantity of coating portions is three or more than three.

In addition, the adjustment of the coating parameters may be performed individually or in combination. For example, the conductivities of the slurries coated by the first coating portion 362, the second coating portion 364, and the third coating portion 366 may be individually controlled, adjusted, and designed to obtain a desired relationship between the separator resistance of the middle coating layer portion and the separator resistances of the side coating layer portions, and the coating depths of the first coating portion 362, the second coating portion 364, and the third coating portion 366 may be individually controlled, adjusted, and designed to obtain the desired relationship between the separator resistance of the middle coating layer portion and the separator resistances of the side coating layer portions. In addition, the two may be combined, that is, both the coating depths of the first coating portion 362, the second coating portion 364, and the third coating portion 366 and the conductivities of the coated slurries are controlled, adjusted and designed to obtain the desired relationship between the separator resistance of the middle coating layer portion and the separator resistances of the side coating layer portions in combination.

According to some embodiments of the present application, the coating roller 30 may be a gravure roller. Therefore, gravure roller type coating, for example, micro gravure roller type coating is used for the electrode plate of the battery. Specifically, a single coating roller 30 may be a gravure roller, and when a plurality of coating rollers are included, the first coating roller 32 may be a gravure roller, and the second coating roller 34 may also be a gravure roller.

According to some embodiments of the present application, the present application further provides a method for coating an electrode plate of a battery with the foregoing coating roller assembly 3, including: immersing the coating roller assembly 3 into troughs, so that the first coating portion 362, the second coating portion 364, and the third coating portion 366 each are attached with a slurry from a respective trough; and coating the electrode plate with the coating roller assembly 3, to form a first coating layer portion on the electrode plate by the first coating portion 362, form a second coating layer portion on the electrode plate by the second coating portion 364, and form a third coating layer portion on the electrode plate by the third coating portion 366. The third coating layer portion is located between the first coating layer portion and the second coating layer portion.

Specifically, the method includes the following steps.

The coating roller assembly 3 is immersed into the troughs, so that the first coating portion 362, the second coating portion 364, and the third coating portion 366 each are attached with a slurry from a respective trough.

When a first coating roller 32 and a second coating roller 34 are included, the two coating rollers may be respectively immersed into troughs. For example, the two coating rollers may be immersed in different troughs, so that the first coating portion 362, the second coating portion 364, and the third coating portion 366 are attached with slurries with different conductivities, for example, the first coating portion 362 and the second coating portion 364 are attached with slurries with larger conductivities, and the third coating portion 366 is attached with a slurry with a smaller conductivity. In addition, in a solution in which differentiated coating is implemented by controlling coating depths, the two coating rollers may alternatively be immersed in the same or different resin troughs.

When a single coating roller 30 is included, the coating roller assembly 3 may be directly immersed into a trough. In this case, the trough may be in the form of a combination of a plurality of troughs. As shown in FIG. 8, troughs 40 may include a first trough 402, a second trough 404, and a third trough 406. The first trough 402 corresponds to the first coating portion 362, the second trough 404 corresponds to the second coating portion 364, and the third trough 406 corresponds to the third coating portion 366, so that the first coating portion 362 may be attached with a slurry from the first trough 402, the second coating portion 364 may be attached with a slurry from the second trough 404, and the third coating portion 366 may be attached with a slurry from the third trough 406. The first trough 402, the second trough 404, and the third trough 406 may contain slurries having different conductivities. For example, the first trough 402 and the second trough 404 may contain slurries having larger conductivities, and the third trough 406 may contain a slurry having a smaller conductivity. In addition, in a solution in which differentiated coating is implemented by controlling coating depths, the first trough 402, the second trough 404, and the third trough 406 may contain slurries having the same or different conductivities.

After the first coating portion 362, the second coating portion 364, and the third coating portion 366 are attached with slurries, the electrode plate is coated with the coating roller assembly 3, first and second coating layer portions are formed on the electrode plate by the first coating portion 362 and the second coating portion 364, and a third coating layer portion is formed on the electrode plate by the third coating portion 366, where the third coating layer portion is located between the first coating layer portion and the second coating layer portion. The separator resistance of the third coating layer portion formed in this way may be greater than the separator resistances of the first and second coating layer portions. Therefore, the internal current density distribution of the battery can be adjusted, the current density in the middle can be reduced, a lithium precipitation phenomenon in the middle of the battery can be alleviated, and cycle performance and safety performance of the battery can be improved.

According to some embodiments of the present application, one side of the electrode plate may be coated with the coating roller assembly 3, and the other side of the electrode plate may be coated with the coating roller assembly 3, that is, the coating roller assembly 3 may be separately used to coat both sides of the electrode plate. When the first coating roller 32 and the second coating roller 34 are included, both the first coating roller 32 and the second coating roller 34 are used to coat one side of the electrode plate, and then coat the other side of the electrode plate.

According to some embodiments of the present application, a coating layer is pressed after the coating layer is formed by coating the electrode plate with the coating roller assembly 3. When a single coating roller 30 is included, as described above, the coating widths of the first coating portion 362, the second coating portion 364, and the third coating portion 366 each are less than one third of the total coating width W_{T}. Therefore, a first gap 332 may be defined between the first coating portion 362 and the third coating portion 366, and/or a second gap 334 may be defined between the second coating portion 364 and the third coating portion 366. In this case, there will be a certain gap or spacing between the third coating layer portion formed on the electrode plate by the third coating portion 366 and both the first coating layer portion formed on the electrode plate by the first coating portion 362 and the second coating layer portion formed on the electrode plate by the second coating portion 364, that is, the middle coating layer portion and the side coating layer portions may not be in contact. By pressing the coating layer, the middle coating layer portion and the side coating layer portions may be expanded to both sides thereof to contact each other, to finally form a complete coating layer.

According to some embodiments of the present application, the present application further provides an electrode plate. The electrode plate includes a coating layer formed with the coating roller assembly 3 as described above or the method as described above. Specifically, the electrode plate includes a coating layer, the coating layer including a first coating layer portion, a second coating layer portion, and a third coating layer portion, where the third coating layer portion is located between the first coating layer portion and the second coating layer portion.

As described above, the first coating layer portion may be formed by a first coating portion 362 of a coating roller assembly 3, the second coating layer portion may be formed by a second coating portion 364 of the coating roller assembly 3, and the third coating layer portion may be formed by a third coating portion 366 of the coating roller assembly 3.

In some embodiments, the separator resistance of the third coating layer portion formed on the electrode plate by the third coating portion 366 may be greater than the separator resistance of the first coating layer portion formed on the electrode plate by the first coating portion 362 and the separator resistance of the second coating layer portion formed on the electrode plate by the second coating portion 364. Therefore, the internal current density distribution of a battery can be adjusted, the current density in the middle can be reduced, a lithium precipitation phenomenon in the middle of the battery can be alleviated, and cycle performance and safety performance of the battery can be improved.

Specifically, the separator resistance of the third coating layer portion formed on the electrode plate by the third coating portion 366 may be 1.1 times to 6.2 times the separator resistance of the first coating layer portion formed on the electrode plate by the first coating portion 362 and the separator resistance of the second coating layer portion formed on the electrode plate by the second coating portion 364.

In some embodiments, the conductivity of the first coating layer portion formed on the electrode plate by the first coating portion 362 and the conductivity of the second coating layer portion formed on the electrode plate by the second coating portion 364 may be the same.

In some embodiments, the conductivity of the third coating layer portion formed on the electrode plate by the third coating portion 366 may be less than the conductivity of the first coating layer portion formed on the electrode plate by the first coating portion 362 and the conductivity of the second coating layer portion formed on the electrode plate by the second coating portion 364.

Specifically, the conductive carbon content of the first coating layer portion formed on the electrode plate by the first coating portion 362 may be 40% to 50%, the conductive carbon content of the second coating layer portion formed on the electrode plate by the second coating portion 364 may be 40% to 50%, and the conductive carbon content of the third coating layer portion formed on the electrode plate by the third coating portion 366 may be 5% to 20%.

In some embodiments, the thickness of the first coating layer portion formed on the electrode plate by the first coating portion 362 and the thickness of the second coating layer portion formed on the electrode plate by the second coating portion 364 may be the same.

In some embodiments, the thickness of the third coating layer portion formed on the electrode plate by the third coating portion 366 may be greater than the thickness of the first coating layer portion formed on the electrode plate by the first coating portion 362 and the thickness of the second coating layer portion formed on the electrode plate by the second coating portion 364.

Specifically, the thickness of the third coating layer portion formed on the electrode plate by the third coating portion 366 may be 1.1 times to 6.2 times the thickness of the first coating layer portion formed on the electrode plate by the first coating portion 362 and/or the thickness of the second coating layer portion formed on the electrode plate by the second coating portion 364.

According to some embodiments of the present application, the present application further provides a battery, including the electrode plate as described above.

Based on the foregoing embodiments, results of comparison with comparative examples are as follows:

| Solution | Ratio of the separator resistance in the middle to the separator resistance of two sides | Lithium precipitation in the middle |
|---|---|---|
| Example 1 | 1.1 | None |
| Example 2 | 2.0 | None |
| Example 3 | 3.0 | None |
| Example 4 | 4.0 | None |
| Example 5 | 5.0 | None |
| Example 6 | 6.2 | None |
| Comparative example 1 | 1.0 | Yes |
| Comparative example 2 | 0.9 | Yes |
| Comparative example 3 | 7.0 | Yes |

It can be seen that when the separator resistance of the third coating layer portion formed on the electrode plate by the third coating portion 366 is 1.1 times to 6.2 times the separator resistance of the first and second coating layer portions formed on the electrode plate by the first coating portion 362 and the second coating portion 364, the occurrence of a lithium precipitation phenomenon in the middle can be avoided, and the lithium precipitation phenomenon may occur when the ratio is too high or too low.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A coating roller assembly (3), configured to coat an electrode plate of a battery, **characterized by** comprising:
coating rollers (30); and
coating portions (36), disposed around the coating rollers (30);
wherein the coating portions (36) comprise a first coating portion (362), a second coating portion (364), and a third coating portion (366); and
wherein the first coating portion (362) is configured to form a first coating layer portion, the second coating portion (364) is configured to form a second coating layer portion, and the third coating portion (366) is configured to form a third coating layer portion between the first coating layer portion and the second coating layer portion.

2. The coating roller assembly (3) according to claim 1, wherein the coating rollers (30) comprise at least a first coating roller (32) and a second coating roller (34);
wherein the coating portions (36) are correspondingly disposed around the first coating roller (32) and the second coating roller (34); and
wherein two of the first coating portion (362), the second coating portion (364), and the third coating portion (366) are disposed on the first coating roller (32), and the remaining one of the first coating portion (362), the second coating portion (364), and the third coating portion (366) is disposed on the second coating roller (34).

3. The coating roller assembly (3) according to claim 2, wherein the first coating portion (362) and the second coating portion (364) are disposed on the first coating roller (32), a spacing region (324) is defined between the first coating portion (362) and the second coating portion (364), and the third coating portion (366) is disposed on the second coating roller (34) and is positioned to correspond to the spacing region (324).

4. The coating roller assembly (3) according to claim 2 or 3, wherein the first coating portion (362), the second coating portion (364), and the third coating portion (366) define a total coating width, wherein the coating width of the first coating portion (362) is one third of the total coating width, the coating width of the second coating portion (364) is one third of the total coating width, and the coating width of the third coating portion (366) is greater than one third of the total coating width.

5. The coating roller assembly (3) according to claim 4, wherein the coating width of the third coating portion (366) is 0.5% to 2% greater than one third of the total coating width.

6. The coating roller assembly (3) according to claim 1, wherein the first coating portion (362), the second coating portion (364), and the third coating portion (366) are disposed side by side on the coating rollers (30), and the third coating portion (366) is located between the first coating portion (362) and the second coating portion (364).

7. The coating roller assembly (3) according to claim 6, wherein the first coating portion (362), the second coating portion (364), and the third coating portion (366) define a total coating width, wherein the coating width of the first coating portion (362) is less than one third of the total coating width, the coating width of the second coating portion (364) is less than one third of the total coating width, and the coating width of the third coating portion (366) is less than one third of the total coating width.

8. The coating roller assembly (3) according to claim 7, wherein the coating width of the first coating portion (362) is 0.5% to 2% less than one third of the total coating width, the coating width of the second coating portion (364) is 0.5% to 2% less than one third of the total coating width, and the coating width of the third coating portion (366) is 0.5% to 2% less than one third of the total coating width.

9. The coating roller assembly (3) according to any one of claims 6 to 8, wherein a first gap (332) is comprised between the first coating portion (362) and the third coating portion (366), and/or a second gap (334) is comprised between the second coating portion (364) and the third coating portion (366).

10. The coating roller assembly (3) according to claim 9, wherein the width of the first gap (332) is the same as the width of the second gap (334).

11. The coating roller assembly (3) according to any one of claims 1 to 10, wherein the conductivity of a slurry coated by the first coating portion (362) is the same as the conductivity of a slurry coated by the second coating portion (364).

12. The coating roller assembly (3) according to any one of claims 1 to 11, wherein the conductivity of a slurry coated by the third coating portion (366) is less than the conductivity of the slurry coated by the first coating portion (362) and the conductivity of the slurry coated by the second coating portion (364).

13. The coating roller assembly (3) according to any one of claims 1 to 12, wherein the conductive carbon content of the slurry coated by the first coating portion (362) is 40% to 50%, the conductive carbon content of the slurry coated by the second coating portion (364) is 40% to 50%, and the conductive carbon content of the slurry coated by the third coating portion (366) is 5% to 20%.

14. The coating roller assembly (3) according to any one of claims 1 to 13, wherein the coating depth of the first coating portion (362) is the same as the coating depth of the second coating portion (364).

15. The coating roller assembly (3) according to any one of claims 1 to 14, wherein the coating depth of the third coating portion (366) is greater than the coating depth of the first coating portion (362) and the coating depth of the second coating portion (364).

16. The coating roller assembly (3) according to any one of claims 1 to 15, wherein the coating depth of the third coating portion (366) is 1.1 times to 6.2 times the coating depth of the first coating portion (362) and/or the coating depth of the second coating portion (364).

17. The coating roller assembly (3) according to any one of claims 1 to 16, wherein the coating rollers (30) are gravure rollers.

18. A method for coating an electrode plate of a battery with the coating roller assembly (3) according to any one of claims 1 to 17, **characterized by** comprising the following steps:
immersing the coating roller assembly (3) into troughs, so that the first coating portion (362), the second coating portion (364), and the third coating portion (366) each are attached with a slurry from a respective trough; and
coating an electrode plate with the coating roller assembly (3), to form a first coating layer portion on the electrode plate by the first coating portion (362), form a second coating layer portion on the electrode plate by the second coating portion (364), and form a third coating layer portion on the electrode plate by the third coating portion (366), wherein the third coating layer portion is located between the first coating layer portion and the second coating layer portion.

19. The method according to claim 18, wherein the method comprises the following steps: coating one side of the electrode plate with the coating roller assembly (3), and coating the other side of the electrode plate with the coating roller assembly (3).

20. The method according to claim 18 or 19, wherein the method comprises the following step: pressing a coating layer after the coating layer is formed by coating the electrode plate with the coating roller assembly (3).

21. An electrode plate, **characterized by** comprising a coating layer, the coating layer comprising a first coating layer portion, a second coating layer portion, and a third coating layer portion, wherein the third coating layer portion is located between the first coating layer portion and the second coating layer portion.

22. The electrode plate according to claim 21, wherein the coating layer is formed by a coating roller assembly (3), wherein the first coating layer portion is formed by a first coating portion (362) of the coating roller assembly (3), the second coating layer portion is formed by a second coating portion (364) of the coating roller assembly (3), and the third coating layer portion is formed by a third coating portion (366) of the coating roller assembly (3).

23. The electrode plate according to claim 21 or 22, wherein the separator resistance of the third coating layer portion is greater than the separator resistance of the first coating layer portion and the separator resistance of the second coating layer portion.

24. The electrode plate according to any one of claims 21 to 23, wherein the separator resistance of the third coating layer portion is 1.1 to 6.2 times the separator resistance of the first coating layer portion, and is 1.1 to 6.2 times the separator resistance of the second coating layer portion.

25. The electrode plate according to any one of claims 21 to 24, wherein the conductivity of the first coating layer portion is the same as the conductivity of the second coating layer portion.

26. The electrode plate according to any one of claims 21 to 25, wherein the conductivity of the third coating layer portion is less than the conductivity of the first coating layer portion and the conductivity of the second coating layer portion.

27. The electrode plate according to any one of claims 21 to 26, wherein the conductive carbon content of the first coating layer portion is 40% to 50%, the conductive carbon content of the second coating layer portion is 40% to 50%, and the conductive carbon content of the third coating layer portion is 5% to 20%.

28. The electrode plate according to any one of claims 21 to 27, wherein the thickness of the first coating layer portion is the same as the thickness of the second coating layer portion.

29. The electrode plate according to any one of claims 21 to 28, wherein the thickness of the third coating layer portion is greater than the thickness of the first coating layer portion and the thickness of the second coating layer portion.

30. The electrode plate according to any one of claims 21 to 29, wherein the thickness of the third coating layer portion is 1.1 to 6.2 times the thickness of the first coating layer portion and/or the thickness of the second coating layer portion.

31. A battery, comprising the electrode plate according to any one of claims 21 to 30.
